# EUROPÄISCHE PATENTSCHRIFT

(11) **EP 2 170 586 B1**
(45) Veröffentlichungstag und Bekanntmachung des Hinweises auf die Patenterteilung: **29.06.2011**
(21) Anmeldenummer: 08786236.3
(22) Anmeldetag: 18.07.2008
(51) Int. Cl.: B29C 70/24

(54) **VORRICHTUNG UND VERFAHREN ZUR BEREITSTELLUNG VON ABGELÄNGTEN ROVINGS SOWIE MASCHINE ZUR VERSTÄRKUNG EINES TEXTILEN HALBZEUGS**
DEVICE AND METHOD FOR THE PROVISION OF CUT ROVINGS AND MACHINE FOR THE REINFORCEMENT OF A SEMI-FINISHED TEXTILE PRODUCT
DISPOSITIF ET PROCÉDÉ DE PRÉPARATION DE MÈCHES DÉCOUPÉES À UNE CERTAINE LONGUEUR AINSI QUE MACHINE POUR RENFORCER UNE ÉBAUCHE TEXTILE

(30) Priorität: 20.07.2007 DE 102007033869; 20.07.2007 US 950967 P
(43) Veröffentlichungstag der Anmeldung: 07.04.2010
(73) Patentinhaber: Airbus Operations GmbH, 21129 Hamburg (DE); EADS Deutschland GmbH, 85521 Ottobrunn (DE)
(72) Erfinder: WEBER, Hans-Jürgen, 27283 Verden (DE); ENDRES, Gregor Christian, 85276 Pfaffenhofen (DE)
(74) Vertreter: Reinhard - Skuhra - Weise & Partner GbR
(86) Internationale Anmeldenummer: PCT/EP2008/059455
(87) Internationale Veröffentlichungsnummer: WO 2009/013241

(56) Entgegenhaltungen:
- WO-A-92/00845
- DE-A1-102005 024 408

## Beschreibung

Die vorliegende Erfindung bezieht sich auf eine Vorrichtung und ein Verfahren zum Bereitstellen von abgelängten Rovings definierter Länge von einem Endlosroving, insbesondere im Luft- und Raumfahrtbereich, sowie auf eine Maschine zur Verstärkung eines textilen Halbzeugs, insbesondere in dessen Dickenrichtung.

Faserverbundkunststoff (FVK)-Laminate unterscheiden sich von monolithischen Metallen insbesondere dadurch, dass sie einen Schichtenaufbau aufweisen. Bei beispielsweise schlagartiger Belastung kann es daher zum Ablösen zweier aneinander angrenzender Schichten voneinander kommen (auch als "Delamination" bezeichnet). Um ein derartiges Versagensverhalten zu vermeiden, gibt es verschiedene Ansätze, FVK-Laminate mittels senkrecht zu den Schichten (nachfolgend als dritte Raumrichtung bezeichnet) verlaufender Fasern zu verstärken.

Ein erster in diesem Zusammenhang zu nennender Ansatz umfasst die Nähverfahren. Zu unterscheiden sind dabei die Zweiseit- und Einseitnähverfahren:

zweiseitnähverfahren zeichnen sich durch einen Ober- und einen Unterfaden aus. Die Nadel sticht zusammen mit dem Oberfaden durch das FVK-Laminat. Auf der Unterseite des FVK-Laminats wird die Schlaufe des Oberfadens mittels des Unterfadens fixiert. Die Nadel zieht sich zurück und sticht in einem definierten Abstand zum vorhergehenden Stich erneut ein. Durch Wiederholung entsteht dabei eine durchgehende Naht.

Einseitnähverfahren zeichnen sich durch einen fehlenden Unterfaden aus. Zu diesen gehören.beispielsweise das Tuften oder der Blindstich.

Bei den Nähverfahren hat es sich als nachteilig herausgestellt, dass die Nadeln verhältnismäßig dick sind, wodurch es zu starken Faserverschiebungen in den FVK-Laminaten kommt. Auch die mittels Nähverfahren einbringbare Fasermenge ist im Vergleich zu den durch Einstechen der Nadel gebildeten Hohlräumen in den FVK-Laminaten gering.

Ein zweiter bekannter Ansatz zur Verstärkung von FVK-Laminaten in der dritten Raumrichtung bedient sich bereits mit einer Matrix versehener und ausgehärteter Halbzeuge, insbesondere Pins. Diese Pins werden beispielsweise im Pultrusionsverfahren hergestellt, in die FVK-Laminate in der dritten Raumrichtung eingestochen und mittels der Matrix in den FVK-Laminaten fixiert.

Bei dem Verfahren gemäß dem zweiten Ansatz hat sich das Einbringen der Pins als sehr aufwendig und somit kostenintensiv erwiesen.

Daher wurde von der Anmelderin ein besseres Verfahren zur Verstärkung textiler Halbzeuge in der dritten Raumrichtung entwickelt, welches in der DE 102005024408 A1 beschrieben ist, und im Folgenden anhand der Fig. 1 bis 4 kurz umrissen werden soll.

WO 92/00845 offenbart ein mit einer Schlaufe bereitgestellte abgelängte Rovings, eine Schneideeinrichtung, und auch eine Schlaufenform-Vorgabeeinrichturig.

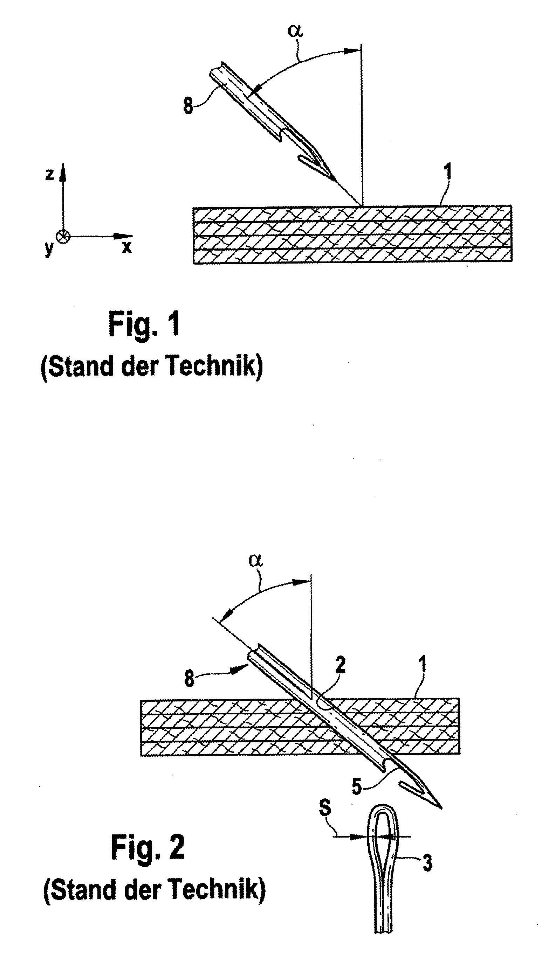

In Fig. 1 ist eine Hakennadel 8 vor dem Einstich in ein textiles Halbzeug 1 gezeigt. Bei dem textilen Halbzeug handelt es sich beispielsweise um ein Fasergelege, bei welchem sich die Fasern wie dargestellt in der x-y-Ebene erstrecken. Wie in Fig. 1 gezeigt, befindet sich die Nadel 8 unter einem Winkel α < 90 Grad zur dritten Raumrichtung z. Die Nadel weist also eine Komponente in der dritten Raumrichtung z auf.

Fig. 2 zeigt ein Stadium des Herstellungsverfahrens, in welchem die Nadel 8 das textile Halbzeug 1 mit ihrer Spitze, die eine Öse 5 aufweist, gerade durchdrungen hat. Unterhalb des textilen Halbzeugs 1, im Bereich des Austrittspunktes der Nadel 8 befindet sich ein Roving 3 (beispielsweise ein 24 K-Roving), der in nächster Nähe zur Unterseite des textilen Halbzeugs 1 zu einer Schlaufe geformt wurde. Der Roving 3 wird mittels der Öse 5 von der Nade1 8 aufgegriffen. Der Roving 3 weist eine einfache Stärke S auf, so dass der zu der Schlaufe zusammengelegte Roving der Fig. 2 eine ungefähr doppelte Stärke 2S aufweist.

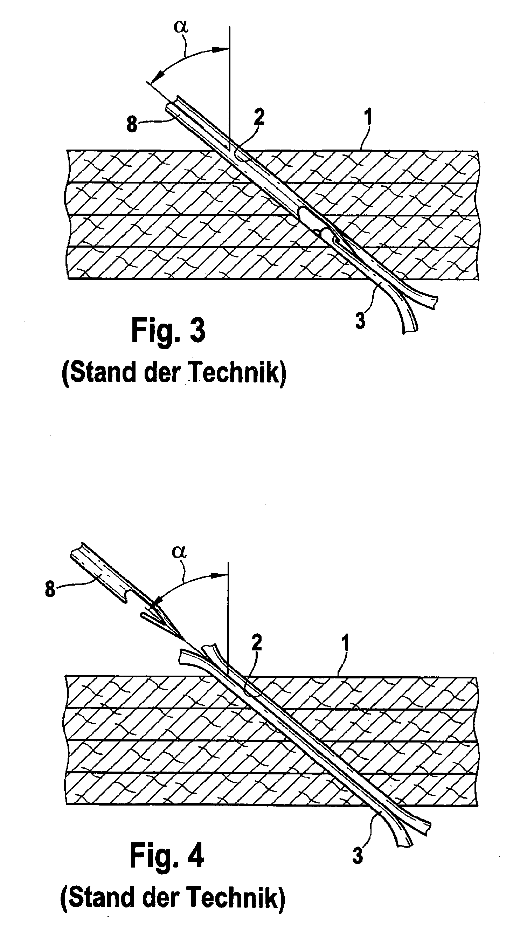

In der Fig. 3 befindet sich die Nadel 8 bereits wieder auf dem Rückzug aus dem textilen Halbzeug 1 und infolge dieses Rückziehens wird der von der Nadel 8 aufgegriffene Roving 3 an der Unterseite des textilen Halbzeugs 1 in das von der Nadel 8 beim Einstich gebildete Durchgangsloch 2 hineingezogen, wobei der Roving 3 verdichtet wird.

In Fig. 4 wurde der gesamte Roving 3 in das textile Halbzeug 1 eingezogen, wobei die Nadel 8 bereits von dem Roving 3 entkoppelt worden ist. Der Roving 3 kann nun beispielsweise bündig auf beiden Seiten des textilen Halbzeugs 1 abgeschnitten werden, um anschließen das Durchgangsloch 2 und den darin angeordneten Roving 3 mit einem Harz zu infiltrieren.

Rovingmaterial wird für gewöhnlich als Endlosroving bereitgestellt, welcher beispielsweise auf einer Spule aufgewickelt ist. Um nun den in Fig. 3 dargestellten abgelängten Roving 3 zu erhalten, welcher eine an die Dicke (in z-Richtung) des textilen Halbzeugs 1 angepasste Länge aufweist, muss dieser von dem Endlosroving abgetrennt werden und der Öse 5 der Nadel 8 unterhalb des textilen Halbzeugs 1 bereitgestellt werden.

Eine manuelle Bereitstellung des Rovings 3 in Fig. 2 kommt aus Kostengründen nicht in Frage. Deshalb wird eine Vorrichtung benötigt, die den Roving 3 automatisiert bereitstellt. Eine derartige Vorrichtung ist derzeit am Markt nicht verfügbar.

Es ist daher Aufgabe der vorliegenden Erfindung eine Vorrichtung und ein Verfahren zum Bereitstellen von abgelängten Rovings definierter Länge von einem Endlosroving, insbesondere im Luft- und Raumfahrtbereich, bereitzustellen. Eine weitere Aufgabe der vorliegenden Erfindung ist es, eine Maschine bereitzustellen, mittels der ein textiles Halbzeug, insbesondere in dessen Dickenrichtung, verstärkbar ist.

Erfindungsgemäß wird diese Aufgabe durch eine Vorrichtung mit den Merkmalen des Patentanspruchs 1 und/oder ein Verfahren mit den Merkmalen des Patentanspruchs 15 und/oder durch eine Maschine mit den Merkmalen des Patentanspruchs 16 gelöst.

Demgemäß wird eine Vorrichtung mit einer Schlaufenform-Vorgabeeinrichtung, einer Schlaufen-Aufspanneinrichtung und einer Schneideeinrichtung bereitgestellt. Die Schlaufen-Aufspanneinrichtung ist um die Schlaufenform-Vorgabeeinrichtung rotierbar vorgesehen, wobei der Endlosroving auf die Schlaufenform-Vorgabeeinrichtung zum Bilden der Schlaufe aufspannbar ist. Mittels der Schneideeinrichtung ist die Schlaufe von dem Endlosroving zum Erzeugen des abgelängten Rovings ablängbar.

Gemäß dem erfindungsgemäßen Verfahren sind folgende Schritte vorgesehen: Zunächst wird eine Form einer zu bildenden Schlaufe mittels einer Schlaufenform-Vorgabeeinrichtung vorgegeben. In einem weiteren Schritt wird der Endlosroving auf die Schlaufenform-Vorgabeeinrichtung mittels einer um die Schlaufenform-Vorgabeeinrichtung rotierbaren Schlaufen-Aufspanneinrichtung aufgespannt. Anschließend wird die gebildete Schlaufe von dem Endlosroving abgelängt, um somit den abgelängten Roving zu erzeugen. Das Ablängen erfolgt mittels einer Schneideeinrichtung.

Die erfindungsgemäße Maschine weist die erfindungsgemäße Vorrichtung, eine Nadel und einen Aufnahmebereich auf. Die Nadel weist eine Spitze, die mit einer Öse zur Aufnahme des abgelängten Rovings versehen ist, auf. In den Aufnahmebereich ist ein textiles Halbzeug flächig zwischen der Nadel und der Vorrichtung einlegbar. In einem ersten Arbeitsschritt der Maschine durchdringt die Nadel das textile Halbzeug und bildet somit ein Durchgangsloch in diesem aus. In einem zweiten Arbeitsschritt der Maschine nimmt die Öse den abgelängten Roving aus dem Entnahmebereich der Schlaufenform-Vorgabeeinrichtung in etwa mittig auf und in einem dritten Arbeitsschritt zieht die Nadel den sich doppelt legenden Roving in das Durchgangsloch ein.

Die der vorliegenden Erfindung zugrundeliegende Idee besteht darin, dass ein abgelängter Roving definierter Länge einfach dadurch erzeugt werden kann, dass der Endlosroving um einen Körper gewickelt und danach abgeschnitten wird. Eine Vorrichtung mittels der sich dies bewerkstelligen lässt, weist einen sehr einfachen Aufbau auf.

Dadurch, dass der Roving als Schlaufe bereitgestellt wird, lässt er sich sehr einfach so aufgreifen, dass er die im Zusammenhang mit Fig. 2 dargestellt doppelt gelegte Gestalt annimmt.

In den Unteransprüchen finden sich vorteilhafte Ausgestaltungen und Verbesserung der Erfindung.

Unter "einer um die Schlaufenform-Vorgabeeinrichtung rotierbaren Schlaufen-Aufspanneinrichtung" sollen kinematisch äquivalenten Ausführungsformen subsummiert sein, bei denen der Endlosroving auf die Vorgabeeinrichtung aufspannbar ist. Demnach kann also die Schlaufen-Aufspanneinrichtung um die Schlaufenform-Vorgabeeinrichtung rotiert werden oder auch die Schlaufenform-Vorgabeeinrichtung in einer stationären Schlaufen-Aufspanneinrichtung rotiert werden.

Unter einem "textilen Halbzeug" sollen im Rahmen der vorliegenden Erfindung nicht nur jegliche Fasergelege, Fasergewebe und Faserfilze, aber auch Schäume, beispielsweise PMI-Hartschaumstoff oder PVC-Schaumstoff oder PU-Schaumstoff, subsummiert sein.

Mit "Rovings" sind Bündel von Fasern, insbesondere aus Glas, Aramid oder Kohlenstoff, gemeint. Aber auch einzelne Fasern und Garne sollen vorliegend unter dem Begriff Roving subsumiert sein. Die Rovings können auch mit einer Harzmatrix vorimprägniert sein.

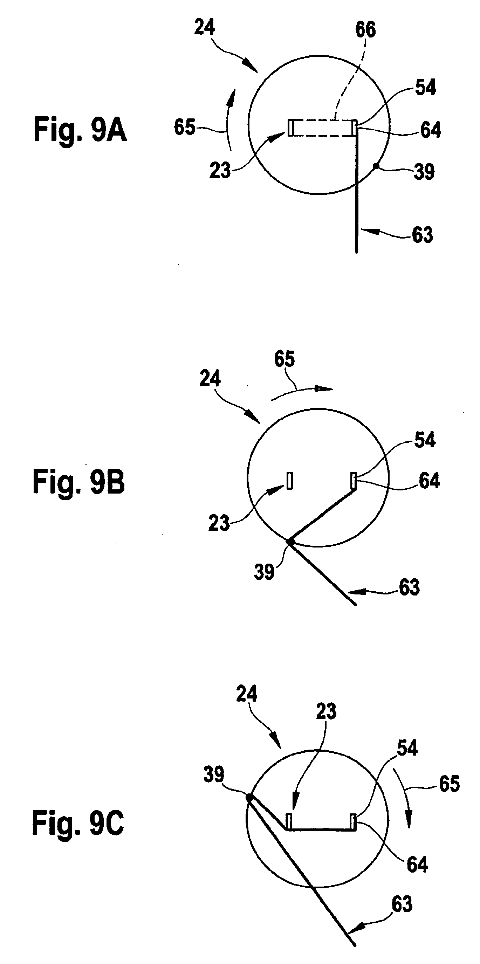

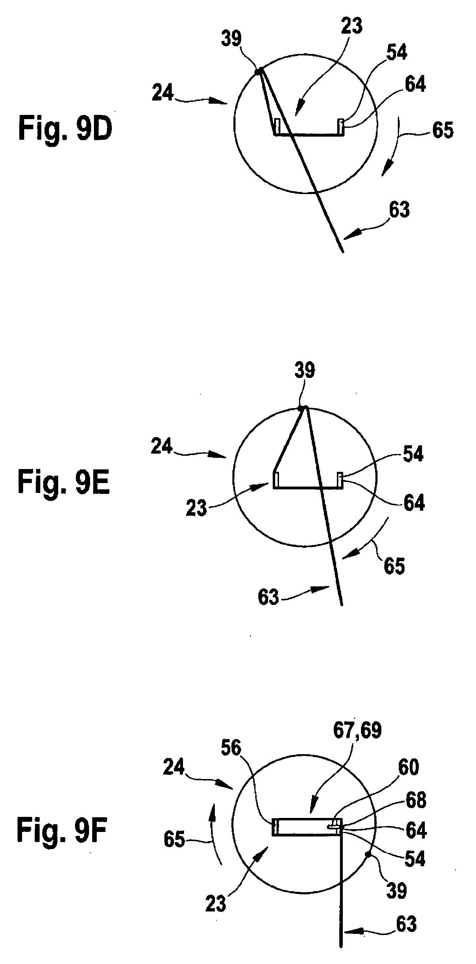

Mit "Schlaufe" ist vorliegend eine geschlossene Geometrie des Endlosrovings gemeint. Ein Beispiel einer solchen geschlossenen Geometrie ist in einer Draufsicht Fig. 9F entnehmbar. Gemäß vorliegender Definition beginnt die Schlaufe an einem Ende des Endlosrovings und endet in dem Bereich des Endlosrovings, welcher nach dem Aufspannen auf die Schlaufenform-vorgabeeinrichtung parallel und angrenzend an das Ende des Endlosrovings angeordnet ist (Dies ist nur der Fall in Fig. 9F, nicht jedoch in den Fig. 9A bis 9E). Eine geschlossene Geometrie erlaubt einen direkten Übergang zwischen nacheinander ablaufenden Schritten zur Herstellung von abgelängten Rovings.

Gemäß einer bevorzugten Weiterbildung der erfindungsgemäßen Vorrichtung weist die Schlaufenform-Vorgabeeinrichtung ein entnahmeseitiges Haltemittel und ein von diesem beabstandetes zuführseitiges Haltemittel auf, welche einen Rahmen bilden, auf den der Endlosroving zum Bilden der Schlaufe aufspannbar ist.

Wird der Endlosroving um den Rahmen einmal gewickelt und dieser dann abgeschnitten, so ergibt sich ein abgelängter Roving definierter Länge. Vorteilhaft hierbei ist, dass der abgelängte Roving mittels einer rotatorischen Bewegung erzeugt werden kann, welche kinematisch einfach zu realisieren ist.

Der Rahmen kann grundsätzlich mehreckig, insbesondere dreieckig oder viereckig, oder elliptisch oder rund ausgebildet sein, wobei jedoch ein rechteckiger Rahmen bevorzugt wird. Die zuführseitigen und entnahmeseitigen Haltemittel definieren dabei vorzugsweise die Eckpunkte des Rahmens.

Gemäß einer weiter bevorzugten Ausführungsform der erfindungsgemäßen Vorrichtung sind das entnahmeseitige und das zuführseitige Haltemittel als Nuten ausgebildet.

In dem Fall, dass das entnahmeseitige bzw. zuführseitige Haltemittel aus mehreren Bauteilen ausgebildet ist, kann beispielsweise jedes dieser Bauteile eine geeignete Nut aufweisen. Nuten sind gut geeignet um ein Verrutschen der Schlaufe in einer Richtung quer zur Nuterstreckungsrichtung zu verhindern, wobei die Nuten gleichzeitig einfach mittels des Endlosrovings umwickelbar sind, d.h. für die Schlaufen-Aufspanneinrichtung zum Einlegen des Rovings in die Nut zugänglich sind.

Bei einer weiter bevorzugten Weiterbildung der erfindungsgemäßen Vorrichtung weist die Schlaufenform-Vorgabeeinrichtung einen Entnahmebereich für ein Aufnehmen des abgelängten Roving mittels einer Nadel auf.

Es soll an dieser Stelle ausdrücklich erwähnt sein, dass die Vorrichtung nicht ausschließlich im Zusammenspiel mit einer Nadel verwendbar ist, aber dass auch andere Mittel zur Entnahme des Fadens aus dem Entnahmebereich vorgesehen sein können. Jedoch gestaltet sich die Entnahme des abgelängten Rovings mittels einer Nadel besonders einfach, insbesondere dann, wenn die Nadel als Hakennadel, also mit einer entsprechenden Öse zum Aufgreifen des abgelängten Rovings, ausgebildet ist. Insbesondere sind der Entnahmebereich und das entnahmeseitige Haltemittel mit wenigstens teilweise den gleichen Mitteln bewirkt, also beispielsweise sind die Nuten des Entnahmebereichs dieselben wie die des entnahmeseitigen Haltemittels.

Gemäß einer weiter bevorzugten Weiterbildung der erfindungsgemäßen Vorrichtung ist der Entnahmebereich als zwei Nuten zum Führen der Schlaufe über eine zwischen den zwei Nuten angeordnete Aussparung ausgebildet.

Dabei greift die Nadel zwischen die zwei Nuten in die Aussparung ein, in welcher der Roving in seiner radialen Richtung einfach zugänglich ist und damit einfach von der Hakennadel gegriffen werden kann.

Bei einer weiter bevorzugten Ausführungsform der erfindungsgemäßen Vorrichtung ist die Schneideeinrichtung gegenüberliegend dem Entnahmebereich bezogen auf einen Mittelpunkt einer Symmetrieachse des Rahmens angeordnet.

Daraus ergibt sich der Vorteil, dass der Roving beispielsweise von der Nadel in dem Entnahmebereich mittig gegriffen werden kann, so dass der Roving über seine gesamte Länge die doppelt gelegte Gestalt aufweist.

Bei einer weiter bevorzugten Weiterbildung der erfindungsgemäßen Vorrichtung ist der Abstand zwischen dem entnahmeseitigen und dem zuführseitigen Haltemittel insbesondere mittels eines Spindelantriebs verstellbar.

Durch Verändern des Abstands kann auf sehr einfache Weise die Größe der Schlaufe und damit die Länge des abgelängten Rovings einfach eingestellt werden. Damit ist beispielsweise eine einfache Anpassung der Länge des Rovings an eine variierende Dicke, beispielweise bedingt durch Rampen, des textilen Halbzeugs möglich.

Bei einer weiter bevorzugten Weiterbildung der erfindungsgemäßen Vorrichtung ist das entnahmeseitige Haltemittel mit dem Entnahmebereich ortsfest und das zuführseitige Haltemittel mit der Schneideeinrichtung linear verstellbar bezüglich des entnahmeseitigen Haltemittels mit dem Entnahmebereich vorgesehen.

Diese Maßnahme ermöglicht es, die Größe der Schlaufe und damit die Länge des abgelängten Rovings zu verändern, ohne dass eine Position der Nadel bezüglich der Vorrichtung verändert werden muss, da sich die Position des Entnahmebereichs nicht verändert.

Genauso ist aber auch eine umgekehrte Kinematik denkbar, wobei das entnahmeseitige Haltemittel mit dem Entnahmebereich linear verstellbar bezüglich des zuführseitigen Haltemittels und das zuführseitige Haltemittel mit der Schneideeinrichtung ortsfest vorgesehen ist.

Gemäß einer weiter bevorzugten Weiterbildung der erfindungsgemäßen Vorrichtung weist die Schlaufenform-Vorgabeeinrichtung eine Klemmeinrichtung, insbesondere eine Kerbe oder Klemmrollen, zum Klemmen eines Endes des Endlosrovings auf.

Insbesondere ist die Klemmvorrichtung Bestandteil des zuführseitigen Haltemittels.

Vorzugsweise grenzt die Klemmeinrichtung direkt an die Schneideeinrichtung an, derart, dass, wenn der Endlosroving 1 + x Mal, beispielsweise 1 und 1/8 Mal, um den Rahmen der Schlaufenform-Vorgabeeinrichtung gewickelt worden ist, der dem x Mal zugeordnete Bereich des Endlosrovings in der Klemmeinrichtung geklemmt und der dem 1 Mal zugeordnete Bereich des Endlosrovings von diesem abgeschnitten wird.

Eine Kerbe stellt ein sehr einfaches Mittel dar, um die benötigte Klemmwirkung zu erzielen.

Bei einer weiter bevorzugten Weiterbildung der erfindungsgemäßen vorrichtung weist die Schlaufen-Aufspanneinrichtung einen Ring auf, welcher rotierbar um die Schlaufenform-Vorgabeeinrichtung vorgesehen ist, wobei der Endlosroving der Schlaufenform-Vorgabeeinrichtung durch eine Öffnung in der Wand des Rings zuführbar ist.

Auch hier sollen kinematische Äquivalente mit umfasst sein, d. h., es kann genauso vorgesehen sein, dass die Schlaufenform-Vorgabeeinrichtung um sich selbst rotiert und die Schlaufen-Aufspanneinrichtung, also insbesondere der Ring, stationär vorgesehen ist.

Die Öffnung in der Wand führt den Endlosroving um die Schlaufenform-Vorgabeeinrichtung herum, wobei der Endlosroving nach und nach durch die Öffnung hindurchrutscht und somit der Schlaufenform-Vorgabeeinrichtung zugeführt wird, wobei ein Ende des Endlosrovings an der Schlaufenform-Vorgabeeinrichtung befestigt ist.

Gemäß einer weiter bevorzugten Ausbildung der erfindungsgemäßen Vorrichtung liegt die Öffnung in der Ebene des Rahmens. Insbesondere liegt die Öffnung in der Ebene der Nuten, welche die Haltemittel ausbilden.

Gemäß einer weiter bevorzugten Weiterbildung der erfindungsgemäßen Vorrichtung ist die Öffnung als ein sich in der Umfangsrichtung des Rings abschnittsweise erstreckender Schlitz ausgebildet. Damit lässt sich der Roving schneller auf den Rahmen aufspannen, wie im Zusammenhang mit der Figurenbeschreibung noch näher erläutert wird.

Bei einer weiter bevorzugten Weiterbildung der erfindungsgemäßen Vorrichtung ist an dem Ring außenseitig eine Rampe angeformt, welche in Längsrichtung des Rings gesehen vorgelagert der Öffnung des Rings beginnt und an einer Stirnseite des Rings nachgelagert der Öffnung ausläuft.

Die Rampe hat die Funktion den Roving über die Stirnseite des Rings zu heben zu einem Zeitpunkt zu dem der Endlosroving in etwa die Hälfte der Schlaufe ausbildet, also die Öffnung um in etwa 180 Grad um die Schlaufenform-Vorgabeeinrichtung gewickelt ist. Mittels dieser Maßnahme kann der Roving bzw. der Endlosroving, welcher typischerweise auf einer Spindel, welche stationär vorgesehen ist, bereitgestellt wird, bezogen auf die Spindel um die Schlaufenvorgabeeinrichtung herumgelegt werden.

Bei einer weiter bevorzugten Ausführungsform der Erfindung gemäß der erfindungsgemäßen Vorrichtung weist diese eine Welle auf, an deren einem Ende die Schlaufenform-Vorgabeeinrichtung angebracht ist und an deren anderem Ende Mittel, insbesondere ein Flansch, zum Festlegen der Welle an einer der Vorrichtung zugeordneten Maschine vorgesehen ist, wobei ein an den Ring sich in Längsrichtung anschließender Lagerabschnitt der Schlaufen-Aufspanneinrichtung auf der Welle gelagert vorgesehen ist.

Aufgrund dieser Ausgestaltung ergibt sich, dass der Ring an seiner einen Öffnung von außen her, insbesondere für die Nadel zugänglich ist, so dass der Roving aufgegriffen werden kann, während sich an die andere Öffnung der Lagerabschnitt anschließt, der die Lagermittel aufweist, wodurch die andere Öffnung des Rings im Wesentlichen verschlossen ist. Eine derartig ausgebildete Vorrichtung kann einfach montiert werden.

Bei einer weiter bevorzugten Weiterbildung der erfindungsgemäßen Vorrichtung steht die Rotationsachse des Rings im Wesentlichen senkrecht auf der Ebene des Rahmens.

Hierbei handelt es sich um eine einfache konstruktive Ausgestaltung der vorrichtung.

Bei einer weiter bevorzugten Weiterbildung der erfindungsgemäßen Vorrichtung ist die Schlaufenform-Vorgabeeinrichtung rotationsfest und die Schlaufen-Aufspanneinrichtung rotierend antreibbar vorgesehen.

Eine derartige Weiterbildung vereinfacht den Aufbau einer Maschine, in welcher die Vorrichtung vorgesehen ist, da somit die Nadel, nicht mit der Schlaufenform-Vorgabeeinrichtung mitbewegt werden muss, sondern ortsfest vorgesehen sein kann. Die Erfindung wird im Folgenden anhand von Ausführungsbeispielen unter Bezugnahme auf die beiliegenden Figuren näher erläutert.

Von den Figuren zeigen:
- Fig. 1: einen Verfahrenszustand gemäß einem bekannten Verfahren;
- Fig. 2: einem weiteren Verfahrensschritt gemäß dem be- kannten Verfahren;
- Fig. 3: ein noch weiteren Verfahrensschritt gemäß dem bekannten Verfahren;
- Fig. 4: ein noch weiteren verfahrensschritt gemäß den bekannten Verfahren;
- Fig. 5: in einer Seitenansicht einen Ausschnitt aus ei- ner Maschine mit einer Vorrichtung gemäß einem Ausführungsbeispiel der vorliegenden Erfindung;
- Fig. 6: einen Ring der Vorrichtung aus Fig. 5;
- Fig. 7: eine Schlaufenvorgabeeinrichtung aus Fig. 5 in einer Draufsicht;
- Fig. 8: die Schlaufenvorgabeeinrichtung aus Fig. 7 in einer Seitenansicht;
- Fig. 9A bis Fig. 9F: Verfahrenszustände im Betrieb der in Fig. 5 dar- gestellten Vorrichtung;
- Fig. 10: den in Fig. 9A dargestellten Verfahrenzustand in einer perspektivischen Ansicht;
- Fig. 11: den in Fig. 9B dargestellte Verfahrenszustand in einer perspektivischen Ansicht;
- Fig. 12: den in Fig. 9C dargestellten Verfahrenszustand in einer perspektivischen Ansicht;
- Fig. 13: den in Fig. 9E dargestellten Verfahrenszustand in einer perspektivischen Ansicht;
- Fig. 14: einen Verfahrenszustand kurz vor dem in Fig. 9F gezeigten Verfahrenszustand in einer perspekti- vischen Ansicht; und
- Fig. 15: den in Fig. 9F gezeigten Verfahrenszustand in einer perspektivischen Ansicht.

In den Figuren bezeichnen gleiche Bezugszeichen gleiche oder funktionsgleiche Komponenten, soweit nichts Gegenteiliges angegeben ist.

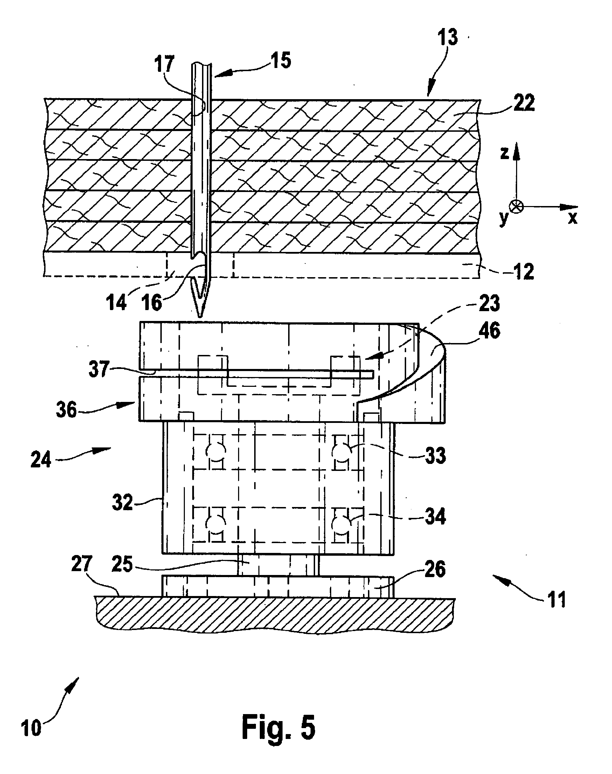

Anhand der Fig. 5 bis 8 soll im Folgenden der Aufbau der erfindungsgemäßen Maschine 10 bzw. der Aufbau der erfindungsgemäßen Vorrichtung 11 erläutert werden.

Die erfindungsgemäße Maschine 10 weist einen Aufnahmebereich 12 (gestrichelt angedeutet) auf, auf welchen, in dem vorliegend dargestellten Verfahrenszustand ein textiles Halbzeug, beispielsweise ein Kohlenstofffasergelege 13, abgelegt ist. Der Aufnahmebereich ist beispielsweise als eine Platte mit einem Durchgangsbereich 14 für eine Hakennadel 15 ausgebildet.

In dem in Fig. 5 dargestellten Verfahrenszustand ist die Hakennadel 15 mit einer einseitig offenen Öse 16 durch das Halbzeug 13 hindurchgestochen. Dabei erstreckt sich die Hakennadel 15 durch ein Durchgangsloch 17 in dem Halbzeug 13 im Wesentlichen senkrecht (also in die dritte Raumrichtung z) zur Erstreckungsebene x-y der Faserschichten (beispielhaft mit dem Bezugszeichen 22 versehen) in dem Halbzeug 13.

Weiterhin weist die Maschine 10 eine Vorrichtung 11 auf, wobei diese unterhalb des Halbzeugs 13 angeordnet ist.

Die Vorrichtung 11 weist eine Schlaufenform-Vorgabeeinrichtung (nachfolgend als Vorgabeeinrichtung bezeichnet) 23, welche innerhalb einer Schlaufen-Aufspanneinrichtung (nachfolgend als Aufspanneinrichtung bezeichnet) 24 angeordnet ist, auf.

Die Vorgabeeinrichtung 23 ist am Ende einer Welle 25 fest angebracht, wobei das der Vorgabeeinrichtung 23 gegenüberliegende Ende der Welle 25 mit einem Flansch 26 versehen ist. Der Flansch 26 ist an einer stationären Stelle 27 der Maschine 10 mittels nicht dargestellter Schrauben befestigt. Die Aufspanneinrichtung 24 weist einen Lagerabschnitt 32 auf, mit welchem sie mittels Lagern 33, 34 auf der Welle 25 rotierbar um diese vorgesehen ist.

An den Lagerabschnitt 32 schließt sich in Richtung des Aufnahmebereichs 12 der Maschine 10 ein Ring 36 an, welcher mit dem Lagerabschnitt 32 fest verbunden ist.

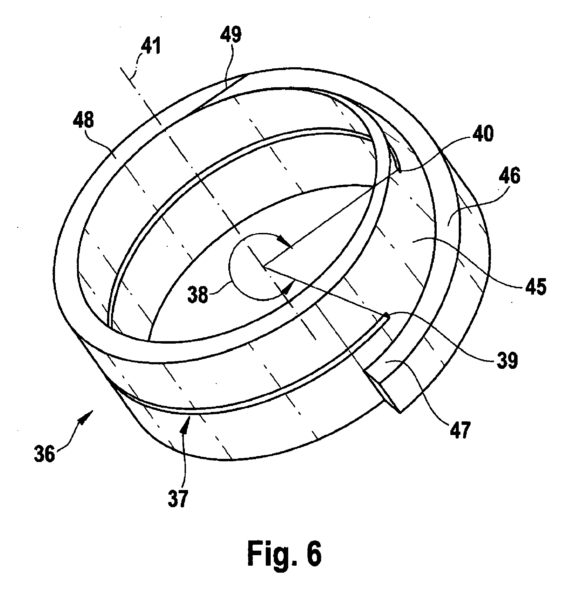

Der Ring 36 ist in Fig. 6 isoliert von der Vorrichtung 11 dargestellt.

Der Ring 36 weist vorzugsweise in etwa mittig einen Schlitz 37 auf, durch welchen ein hier nicht weiter dargestellter Roving zu der Vorgabeeinrichtung 23 innerhalb des Rings 36 durchführbar ist. Der Schlitz 37 erstreckt sich in Umfangsrichtung des Rings 36 in diesem, jedoch lediglich über einen Winkel 38 von vorzugsweise zwischen 180 und 340 Grad. Dabei ist der Anfang des Schlitzes 37 mit dem Bezugszeichen 39 und das Ende des Schlitzes 37 mit dem Bezugszeichen 40 versehen.

Der Ring 36 weist an seiner Außenseite 45 eine Rampe 46 auf, welche sich in Längsrichtung 41 gesehen von einem Bereich 47 unterhalb des Anfangs 39 des Schlitzes 37 um den Ring 36 erstreckt, und an dessen Stirnseite 48 im Bereich 49 ausläuft. Die Stirnseite 48 ist in Einbaulage der Vorrichtung 11 der Hakennadel 15 bzw. dem textilen Halbzeug 13 zugewandt.

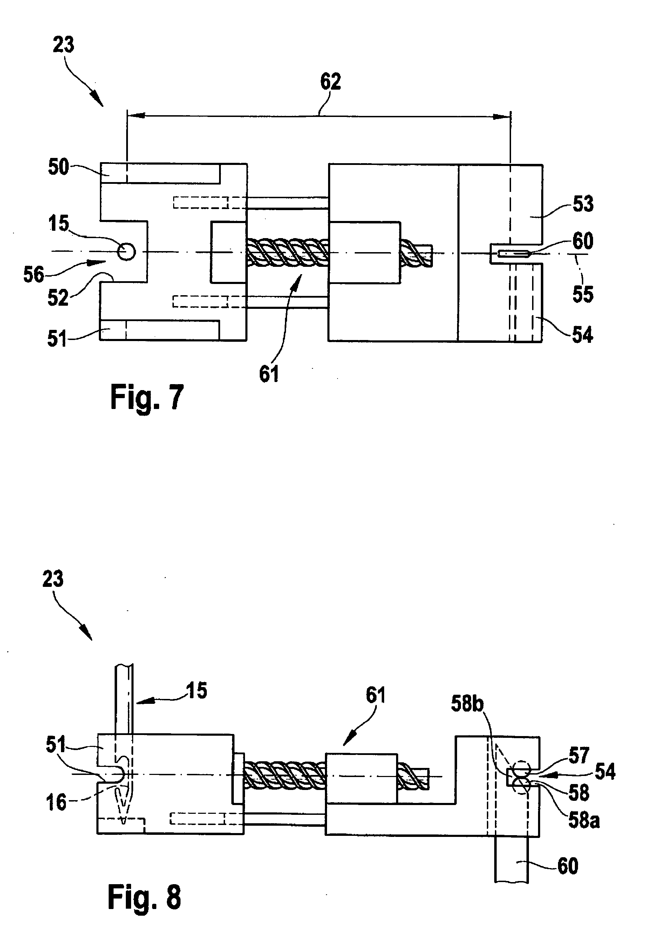

In den Figs. 7 und 8 ist die vorgabeeinrichtung 23 detailliert dargestellt.

Die Vorgabeeinrichtung 23 weist entnahmeseitige Haltemittel 50, 51 auf, welche als Nuten ausgebildet sind. Zwischen den Nuten ist eine Aussparung 52 vorgesehen, welche es der Hakennadel 15 erlaubt, den zwischen den Nuten verlaufenden Roving (nicht dargestellt) mittels der Öse 16 aufzunehmen. Die Stelle, an welcher die Hakennadel 15 bezogen auf die Vorgabeeinrichtung 23 den Roving entnimmt, vorliegend zwischen den zwei Nuten (Haltemittel 50, 51), wird nachfolgend als Entnahmebereich 56 bezeichnet und entspricht in dem in den Fig. 7 und 8 dargestellten Zustand der Position der Öse 16.

Die Vorgabeeinrichtung 23 weist weiterhin zuführseitige Haltemittel 53, 54 gegenüberliegend den entnahmeseitigen Haltemitteln 50, 51 auf. Das Haltemittel 53 ist ebenfalls als Nut ausgebildet, während das Haltemittel 54 als zwei gegenüberliegende, insbesondere elastomerbeschichtete Rollen 57, 58 ausgebildet ist und damit zugleich als eine Klemmeinrichtung fungiert, in welcher der Endlosroving bzw. dessen Ende einklemmbar ist.

Für einen um die vorgabeeinrichtung 23 gewickelten Endlosroving definieren die Haltemittel 50...54 einen Rahmen (siehe Bezugszeichen 66 in Fig. 9A). Zwischen dem Haltemittel 53 und der Klemmeinrichtung 54 ist auf einer Symmetrielinie 55 des gedachten Rahmens, welche einen Schnittpunkt mit der Nadel 15 bildet, ist eine als Messer ausgebildete Schneideeinrichtung 60 angeordnet. Die Schneideeinrichtung 60 durchschneidet den Roving, welcher sich von dem zuführseitigen Haltemittel 53 in die Klemmeinrichtung 54 erstreckt.

Lediglich schematisch ist ein Spindelantrieb 61 dargestellt mittels dem ein Abstand 62 zwischen den entnahmeseitigen Haltemitteln 50, 51 und den zuführseitigen Haltemittel 53 bzw. dem Haltemittel/Klemmeinrichtung 54 veränderbar ist.

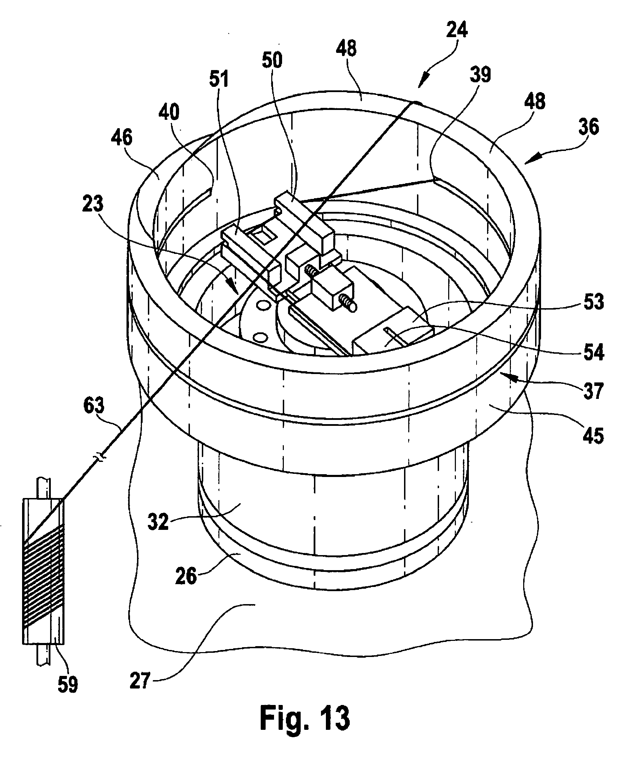

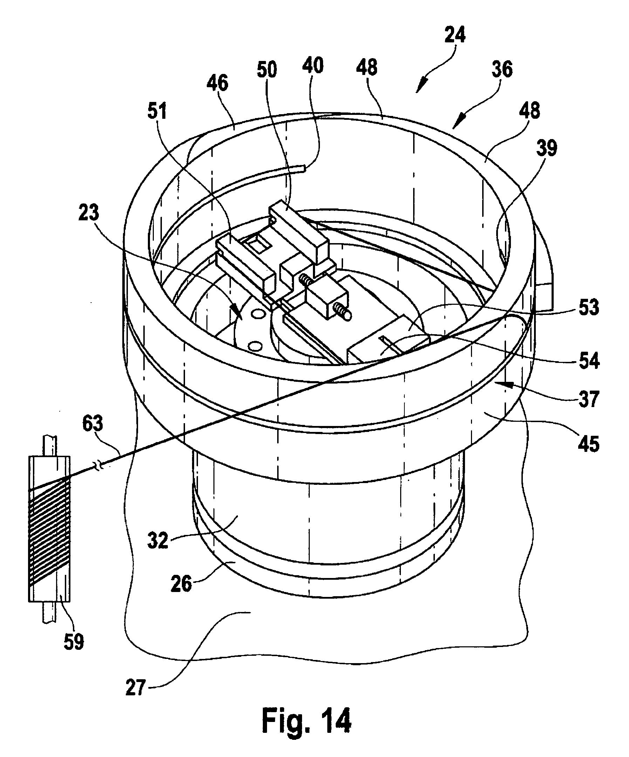

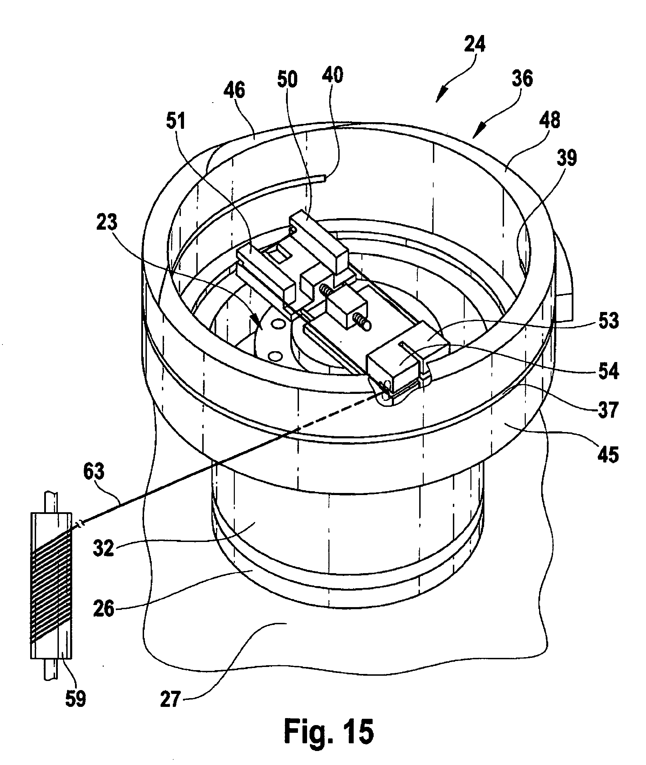

In den Fig. 9 bis 15 ist das erfindungsgemäße Verfahren näher dargestellt.

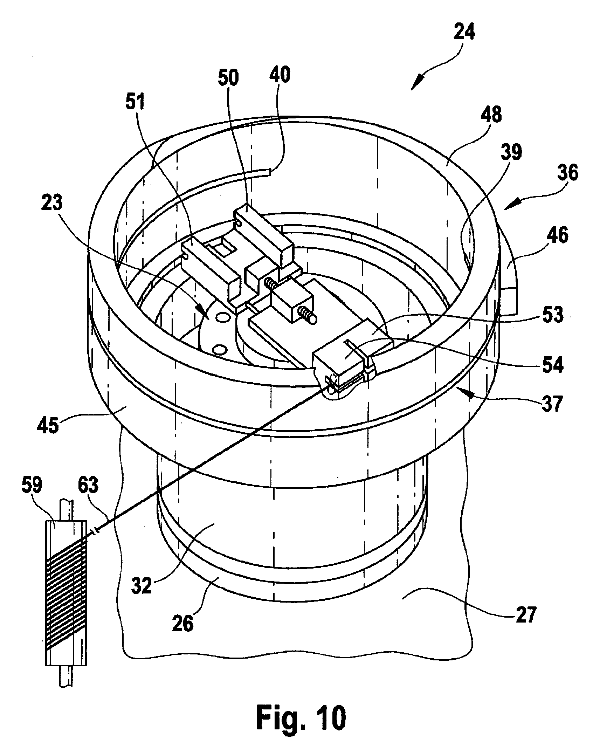

Zu Beginn des Verfahrens wird ein von außerhalb, beispielsweise von einer Spindel 59, der Aufspanneinrichtung 24 durch den Schlitz 37 hindurch geführtes Ende 64 des Endlosrovings 63 in die Klemmeinrichtung 54, also zwischen die Rollen 57, 58, der Vorrichtung 11 eingeklemmt, wie insbesondere aus der Fig. 9A bzw. Fig. 10 ersichtlich.

In einem weiteren Verfahrensschritt dreht sich die Aufspanneinrichtung 24 im Fall des vorliegenden Ausführungsbeispiels im Uhrzeigersinn, angedeutet mit dem Bezugszeichen 65.

Mittels Drehen der Aufspanneinrichtung 24 kommt der Anfang 39 des Schlitzes 37 in Eingriff mit dem Endlosroving 63, wodurch dieser bei weiterer Drehung der Aufspanneinrichtung 24 um die Vorgabeeinrichtung 23 herumgespannt wird, wie aus den Figs. 9B bis 9E und den Figs. 11 bis 14 erkennbar. Eine nicht weiter dargestellte, vorzugsweise zwischen der Vorrichtung 11 und der Spindel 59 angeordnete Einrichtung sorgt dafür, dass der Endlosroving 63 zu jeder Zeit gespannt ist.

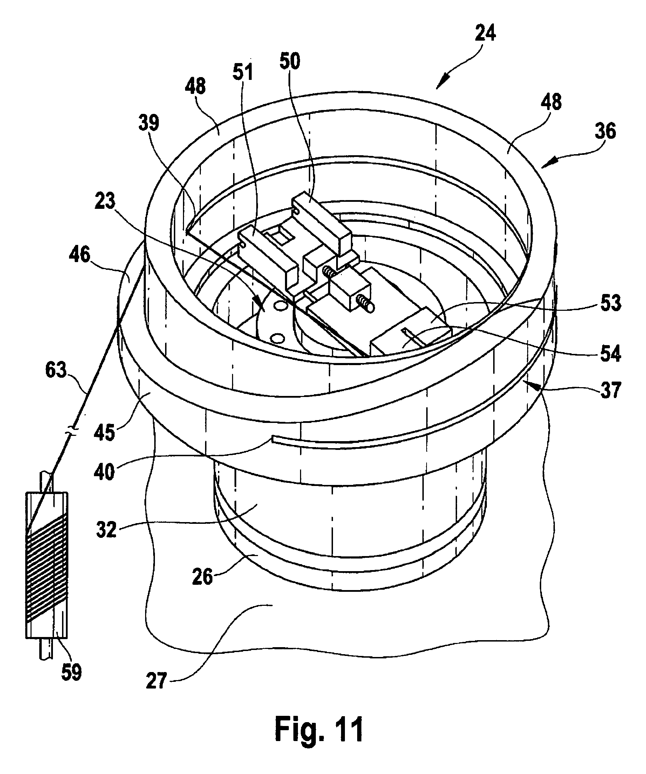

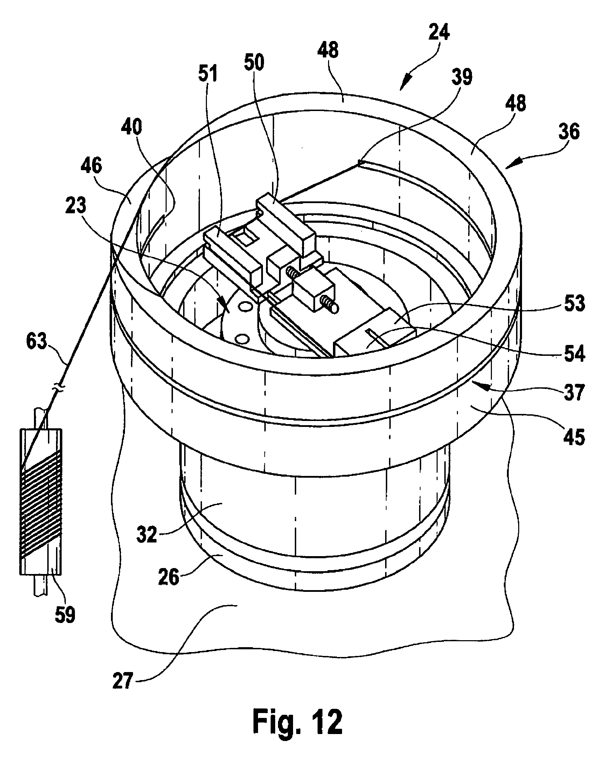

Wie insbesondere aus Fig. 11 und 12 zu erkennen ist, untergreift die Rampe 46 den Endlosroving 63 und hebt diesen nach und nach auf die Stirnseite 48 des Rings 36. Bei Weiterdrehung des Rings 36 rutscht der Endlosroving 63 aufgrund der Spannung in diesem über die Stirnseite 48 hinweg und fällt entlang der Außenwand 45 des Rings 36 herunter. Wegen des Schlitzes 37 ist es dem Endlosroving 63 ermöglicht, sich dann augenblicklich um die entnahmeseitigen Haltemittel 53, 54 zu legen. Wie in den Figs. 9A bis 9F dargestellt, wird der Endlosroving 63 somit um einen im Wesentlichen rechteckigen Rahmen 66 (gedachte Linie) gespannt.

In der Fig. 9F ist die gebildete Schlaufe 67 gut ersichtlich. Um nun den abgelängten Roving bereitzustellen, muss diese Schlaufe 67 von dem Endlosroving 63 abgetrennt werden.

Dies kann jedoch erst geschehen, wenn ein Ende 68, welches der zu bildenden neuen Schlaufe zugeordnet ist, in der Klemmeinrichtung 54 geklemmt ist. Dazu wird das Ende 68 vorderseitig 58a zwischen die Rollen 57, 58 eingezogen, wobei rückseitig 58b das Ende 64 freigegeben wird. Gleichzeitig wird die Schlaufe 67 mittels der Schneideeinrichtung 60 vor dem neu geklemmten Ende 68 der neu zu bildenden Schlaufe abgeschnitten und bildet dann einen abgelängten Roving 69 (entspricht der Schlaufe 67 nach dem Schneidvorgang) mit einer definierten Länge von genau einmal des Umfangs des Rahmens 66.

Anschließend wird der abgelängte Roving 69 aus der Vorrichtung 11 mittels der Öse 16 der Nadel 15 entnommen und in das Durchgangsloch 17 eingezogen werden (siehe Fig. 5).

Wegen der symmetrischen Ausbildung des Rahmens 66 und der gegenüberliegenden Anordnung des Entnahmebereichs 56, in welchem die Nadel 15 den abgelängten Roving 69 aufgreift, und der Schneideeinrichtung 60, kann der abgelängte Roving 69 immer mittig mittels der Nadel 15 gegriffen werden. Insbesondere auch dann, wenn ein Abstand 62 zwischen den Haltemitteln 50, 51 bzw. 53, 54 mittels des Spindelantriebs 61 verstellt wird.

Die Maschine 10 kann selbstverständlich mehrere der Vorrichtungen 11 und zugeordneter Hakennadeln 15 aufweisen.

Der Antrieb, welcher die Aufspanneinrichtung 24 um die stationäre Vorgabeeinrichtung 23 rotieren lässt, ist aus Gründen der Übersichtlichkeit nicht dargestellt worden.

Obwohl die Erfindung vorliegend im Zusammenhang mit einem bevorzugten Ausführungsbeispiel beschrieben wurde, ist sie darauf nicht beschränkt, sondern auf vielfältige Weise modifizierbar.

Die vorliegende Erfindung bezieht sich auf eine Vorrichtung und ein Verfahren zum Bereitstellen von abgelängten Rovings definierter Länge von einem Endlosroving, insbesondere im Luft- und Raumfahrtbereich, sowie eine Maschine mit einer derartigen Vorrichtung. Die Vorrichtung weist eine Schlaufenform-Vorgabeeinrichtung, eine Schlaufeneinspanneinrichtung und eine Schneideeinrichtung auf. Ein Endlosroving ist mittels der Schlaufen-Aufspanneinrichtung auf die Schlaufenform-vorgabeeinrichtung aufspannbar, so dass eine Schlaufe gebildet wird, welche mittels der Schneideeinrichtung zum Erzeugen des abgelängten Rovings ablängbar ist. Mittels der Vorrichtung bzw. des Verfahrens lässt sich auf einfache Weise ein abgelängter Roving bereitstellen, welcher anschließend von einer Nadel aufgegriffen und in ein Durchgangsloch in einem textilen Halbzeug senkrecht zu den Faserschichten in demselben eingezogen werden kann.

### Bezugszeichenliste

- 1: Halbzeug
- 2: Durchgangsloch
- 3: Roving
- 8: Hakennadel
- 10: Maschine
- 11: Vorrichtung
- 12: Aufnahmebereich
- 13: Halbzeug
- 14: Durchgangsbereich
- 15: Hakennadel
- 16: Öse
- 17: Durchgangsloch
- 22: Faserschicht
- 23: Schlaufenform-Vorgabeeinrichtung
- 24: Schlaufen-Aufspanneinrichtung
- 25: Welle
- 26: Flansch
- 27: Stelle
- 32: Lagerabschnitt
- 33: Lager
- 34: Lager
- 36: Ring
- 37: Schlitz
- 38: Winkel
- 39: Anfang
- 40: Ende
- 41: Längsrichtung
- 45: Außenwand
- 46: Rampe
- 47: Bereich, Anfang Schlitz
- 48: Stirnseite
- 49: Bereich, Stirnseite
- 50: Entnahmeseitiges Haltemittel
- 51: Entnahmeseitiges Haltemittel
- 52: Aussparung
- 53: Zuführseitiges Haltemittel
- 54: Zuführseitiges Haltemittel/Klemmeinrichtung
- 55: Symmetrieachse
- 56: Entnahmebereich
- 57: Rolle
- 58: Rolle
- 58a: vorderseitig
- 58b: rückseitig
- 59: Spindel
- 60: Schneideeinrichtung
- 61: Spindelantrieb
- 62: Abstand
- 63: Endlosroving
- 64: Ende des Endlosrovings
- 65: Drehrichtung
- 66: Rahmen
- 67: Schlaufe
- 68: Ende des Endlosrovings, neue Schlaufe
- 69: Abgelängter Roving

## Patentansprüche

1. Vorrichtung (11) zum Bereitstellen von abgelängten Rovings (69) definierter Länge von einem Endlosroving (63), mit:
einer Schlaufenform-Vorgabeeinrichtung (23), welche eine Form einer zu bildenden Schlaufe (67) vorgibt;
einer um die Schlaufenform-Vorgabeeinrichtung (23) rotierbaren Schlaufen-Aufspanneinrichtung (24), mittels welcher der Endlosroving (63) auf die Schlaufenform-Vorgabeeinrichtung (23) zum Bilden der Schlaufe(67) aufspannbar ist; und
einer Schneideeinrichtung (60), mittels welcher die gebildete Schlaufe (67) von dem Endlosroving (63) zum Erzeugen des abgelängten Rovings (63) ablängbar ist.

2. Vorrichtung nach Anspruch 1,,
**dadurch gekennzeichnet,**
**dass** die Schlaufenform-Vorgabeeinrichtung (23) ein entnahmeseitiges Haltemittel (50, 51) und ein von diesem beabstandetes zuführseitiges Haltemittel (53, 54) aufweist, welche zusammen einen Rahmen (66) bilden, auf den der Endlosroving (63) zum Bilden der Schlaufe (67) aufspannbar ist.

3. Vorrichtung nach Anspruch 2,
**dadurch gekennzeichnet,**
**dass** das entnahmeseitige und das zuführseitige Haltemittel (50, 51) als Nuten ausgebildet sind.

4. Vorrichtung nach wenigstens einem der vorhergehenden Ansprüche,
**dadurch gekennzeichnet,**
**dass** die Schlaufenform-Vorgabeeinrichtung (23) einen Entnahmebereich (56) für ein Aufnehmen des abgelängten Rovings (69) mittels einer Nadel (15) aufweist.

5. Vorrichtung nach Anspruch 4,
**dadurch gekennzeichnet,**
**dass** der Entnahmebereich (56) als zwei Nuten zum Führen der Schlaufe (67) über eine zwischen den zwei Nuten angeordnete Aussparung (52) ausgebildet ist.

6. Vorrichtung nach Anspruch 4 oder 5,
**dadurch gekennzeichnet,**
**dass** die Schneideeinrichtung (60) gegenüberliegend des Entnahmebereichs (56) bezogen auf einen Mittelpunkt einer Symmetrieachse (55) des Rahmens (66) angeordnet ist.

7. Vorrichtung nach wenigstens einem der vorhergehenden Ansprüche 2 bis 6,
**dadurch gekennzeichnet,**
**dass** der Abstand (62) zwischen dem entnahmeseitigen und dem zuführseitigen Haltemittel (50, 51; 53, 54) insbesondere mittels eines Spindelantriebs (61) verstellbar ist.

8. Vorrichtung nach Anspruch 7,
**dadurch gekennzeichnet,**
**dass** das entnahmeseitige Haltemittel (50, 51) mit dem Entnahmebereich (56) ortsfest und das zuführseitige Haltemittel (53, 54) mit der Schneideeinrichtung (60) linear verstellbar bezüglich des entnahmeseitigen Haltemittels (50, 51) und dem Entnahmebereich (56) vorgesehen ist.

9. Vorrichtung nach wenigstens einem der vorhergehenden Ansprüche,
**dadurch gekennzeichnet,**
**dass** die Schlaufenform-Vorgabeeinrichtung (23) eine Klemmeinrichtung (54), insbesondere eine Kerbe oder Rollen (57, 58), zum Klemmen eines Endes (64, 68) des Endlosrovings (63) aufweist.

10. Vorrichtung nach wenigstens einem der vorhergehenden Ansprüche,
**dadurch gekennzeichnet,**
**dass** die Schlaufen-Aufspanneinrichtung (24) einen Ring (36) aufweist, welcher rotierbar um die Schlaufenform-Vorgabeeinrichtung (23) vorgesehen ist, wobei der Endlosroving (63) der Schlaufenform-Vorgabeeinrichtung (23) durch eine Öffnung (37) in der Wand des Rings (36) zuführbar ist.

11. Vorrichtung nach Anspruch 10,
**dadurch gekennzeichnet,**
**dass** die Öffnung (37) als ein sich in Umfangsrichtung des Rings (36) abschnittsweise erstreckender Schlitz ausgebildet ist.

12. Vorrichtung nach wenigstens einem der vorhergehenden Ansprüche,
**dadurch gekennzeichnet,**
**dass** an dem Ring (36) außenseitig eine Rampe (46) angeformt ist, welche in Längsrichtung (41) des Rings (36) gesehen vorgelagert der Öffnung (37) beginnt und an einer Stirnseite (48) des Rings (36) nachgelagert der Öffnung (37) ausläuft.

13. Vorrichtung nach wenigstens einem der vorhergehenden Ansprüche,
**dadurch gekennzeichnet,**
**dass** die Schlaufenform-Vorgabeeinrichtung (23) rotationsfest und die Schlaufen-Aufspanneinrichtung (24) rotierend antreibbar vorgesehen ist.

14. Vorrichtung nach wenigstens einem der Ansprüche 10 bis 13,
**dadurch gekennzeichnet,**
**dass** die Vorrichtung (11) eine Welle (25) aufweist, an deren einem Ende die Schlaufenform-Vorgabeeinrichtung (23) angebracht ist und an deren anderen Ende Mittel (26), insbesondere ein Flansch, zum Festlegen der Welle (25) an einer der Vorrichtung (11) zugeordneten Maschine (10) vorgesehen ist, wobei ein an den Ring (36) sich in Längsrichtung (35) anschließender Lagerabschnitt (32) der Schlaufen-Aufspanneinrichtung (24) auf der Welle (25) gelagert vorgesehen ist.

15. Verfahren zum Bereitstellen von abgelängten Rovings (69) definierter Länge von einem Endlosroving (63), mit folgenden Schritten:
Vorgeben einer Form einer zu bildenden Schlaufe (67) mittels einer Schlaufenform-Vorgabeeinrichtung (23);
Aufspannen des Endlosrovings (63) auf die Schlaufenform-Vorgabeeinrichtung (23) mittels einer um die Schlaufenform-Vorgabeeinrichtung (23) rotierbaren Schlaufen-Aufspanneinrichtung (24); und
Ablängen der gebildeten Schlaufe (67) von dem Endlosroving (63) zum Erzeugen des abgelängten Rovings (69) mittels einer Schneideeinrichtung (60).

16. Maschine (10) zur Verstärkung eines textilen Halbzeugs (13), mit:
einer Vorrichtung (11) nach wenigstens einem der vorherigen Ansprüche;
einer Nadel (15), welche eine Spitze aufweist, die mit einer Öse (16) zur Aufnahme des abgelängten Rovings (69) versehen ist; und
einem Aufnahmebereich (12), in welchen das textile Halbzeug (13) flächig zwischen die Nadel (15) und die Vorrichtung (11) einlegbar ist;
wobei die Nadel (15) in einem ersten Arbeitsschritt der Maschine (10) das textile Halbzeug (13) durchdringt und
ein Durchgangsloch (17) in diesem ausbildet, in einem zweiten Arbeitsschritt der Maschine (10) die Öse (16) den abgelängten Roving (69) aus dem Entnahmebereich (56) der Schlaufenform-Vorgabeeinrichtung (23) mittig aufnimmt und in einem dritten Arbeitsschritt den sich doppelt legenden Roving (63) in das Durchgangsloch (17) einzieht.

## Claims

1. An apparatus (11) for providing cut-to-length rovings (69) of a defined length from an endless roving (63), having:
- a loop shape setting device (23), which sets a shape of a loop (67) to be formed;
- a loop tensioning device (24) which is rotatable about the loop shape setting device (23) and by means of which the endless roving (63) may be tensioned round the loop shape setting device (23) to form the loop (67); and
- a cutting device (60), by means of which the loop (67) which is formed may be cut to length from the endless roving (63) to produce the cut-to-length roving (63).

2. An apparatus according to claim 1, **characterised in that** the loop shape setting device (23) comprises a withdrawal-side holding means (50, 51) and a supply-side holding means (53, 54) spaced apart therefrom, which holding means together form a frame (66) round which the endless roving (63) may be tensioned to form the loop (67).

3. An apparatus according to claim 2, **characterised in that** the withdrawal-side and the supply-side holding means (50, 51) take the form of grooves.

4. An apparatus according to at least one of the preceding claims, **characterised in that** the loop shape setting device (23) comprises a withdrawal region (56) for taking up the cut-to-length roving (69) by means of a needle (15).

5. An apparatus according to claim 4, **characterised in that** the withdrawal region (56) takes the form of two grooves for guiding the loop (67) via a recess (52) arranged between the two grooves.

6. An apparatus according to claim 4 or claim 5, **characterised in that** the cutting device (60) is arranged opposite the withdrawal region (56) relative to a centre point of an axis of symmetry (55) of the frame (66).

7. An apparatus according to at least one of preceding claims 2 to 6, **characterised in that** the distance (62) between the withdrawal-side and supply-side holding means (50, 51; 53, 54) is adjustable, in particular by means of a spindle drive (61) .

8. An apparatus according to claim 7, **characterised in that** the withdrawal-side holding means (50, 51) with the withdrawal region (56) is provided so as to be stationary and the supply-side holding means (53, 54) with the cutting device (60) is provided so as to be linearly adjustable with respect to the withdrawal-side holding means (50, 51) and the withdrawal region (56).

9. An apparatus according to at least one of the preceding claims, **characterised in that** the loop shape setting device (23) comprises a clamping device (54), in particular a notch or rolls (57, 58), for clamping one end (64, 68) of the endless roving (63).

10. An apparatus according to at least one of the preceding claims, **characterised in that** the loop tensioning device (24) comprises a ring (36) which is provided so as to be rotatable about the loop shape setting device (23), the endless roving (63) being capable of being fed to the loop shape setting device (23) through an opening (37) in the wall of the ring (36).

11. An apparatus according to claim 10, **characterised in that** the opening (37) takes the form of a slot extending in places in the circumferential direction of the ring (36).

12. An apparatus according to at least one of the preceding claims, **characterised in that** a ramp (46) is formed on the outside of the ring (36), which ramp begins, when viewed in the longitudinal direction (41) of the ring (36), upstream of the opening (37) and ends at an end face (48) of the ring (36) downstream of the opening (37).

13. An apparatus according to at least one of the preceding claims, **characterised in that** the loop shape setting device (23) is provided in rotationally fixed manner and the loop tensioning device (24) is provided so as to be rotatably drivable.

14. An apparatus according to at least one of claims 10 to 13, **characterised in that** the apparatus (11) comprises a shaft (25), on one end of which the loop shape setting device (23) is mounted and at the other end of which a means (26), in particular a flange, is provided for securing the shaft (25) to a machine (10) associated with the apparatus (11), a bearing portion (32), adjoining the ring (36) in the longitudinal direction (35), of the loop tensioning device (24) being mounted on the shaft (25).

15. A method of providing cut-to-length rovings (69) of a defined length from an endless roving (63), having the following steps:
- setting a shape of a loop (67) to be formed by means of a loop shape setting device (23);
- tensioning the endless roving (63) round the loop shape setting device (23) by means of a loop tensioning device (24) rotatable about the loop shape setting device (23); and
- cutting to length the loop (67) formed from the endless roving (63) to produce the cut-to-length roving (69) by means of a cutting device (60).

16. A machine (10) for reinforcing a semi-finished textile product (13), having:
- an apparatus (11) according to at least one of the preceding claims;
- a needle (15), which comprises a point which is provided with an eye (16) for taking up the cut-to-length roving (69); and
- a take-up region (12) into which the semi-finished textile product (13) can be inserted in a planar manner between the needle (15) and the apparatus (11);
wherein in a first operation of the machine (10) the needle (15) penetrates the semi-finished textile product (13) and forms a through-hole (17) therein, in a second operation of the machine (10) the eye (16) centrally takes up the cut-to-length roving (69) from the withdrawal region (56) of the loop shape setting device (23) and in a third operation draws the doubled-up roving (63) into the through-hole (17).

## Revendications

1. Dispositif (11) de préparation de mèches (69) découpées à une certaine longueur définie depuis une mèche sans fin (63), comprenant :
- un dispositif de définition de forme de boucle (23), qui définit une forme d'une boucle (67) à former ;
- un dispositif de serrage des boucles (24) pouvant tourner autour du dispositif de définition de forme de boucle (23), à l'aide duquel la mèche sans fin (63) peut être serrée sur le dispositif de définition de forme de boucle (23) pour former la boucle (67) ; et
- un dispositif de découpe (60), à l'aide duquel la boucle formée (67) de la mèche sans fin (63) peut être découpée pour générer la mèche découpée (63).

2. Dispositif selon la revendication 1, **caractérisé en ce que** le dispositif de définition de forme de boucle (23) présente un moyen de maintien côté prélèvement (50, 51) et un moyen de maintien côté alimentation (53, 54) éloigné de celui-ci, qui forment ensemble un cadre (66) sur lequel la mèche sans fin (63) peut être serrée pour former la boucle (67).

3. Dispositif selon la revendication 2, **caractérisé en ce que** les moyens de maintien côté prélèvement et côté alimentation (50, 51) sont conçus sous forme de rainures.

4. Dispositif selon au moins une des revendications précédentes, **caractérisé en ce que** le dispositif de définition de forme de boucle (23) présente une zone de prélèvement (56) pour une prise de la mèche découpée (69) au moyen d'une aiguille (15).

5. Dispositif selon la revendication 4, **caractérisé en ce que** la zone de prélèvement (56) est conçue sous forme de deux rainures permettant le guidage de la boucle (67) sur un évidement (52) disposé entre les deux rainures.

6. Dispositif selon la revendication 4 ou 5, **caractérisé en ce que** le dispositif de découpe (60) est disposé à l'opposé de la zone de prélèvement (56) par rapport à un point médian d'un axe symétrique (55) du cadre (66).

7. Dispositif selon au moins une des revendications précédentes 2 à 6, **caractérisé en ce que** la distance (62) entre les moyens de maintien côté prélèvement et côté alimentation (50, 51 ; 53, 54) peut être réglée en particulier à l'aide d'un entraînement à broche (61).

8. Dispositif selon la revendication 7, **caractérisé en ce que** le moyen de maintien côté prélèvement (50, 51) doté de la zone de prélèvement (56) sont fixes et le moyen de maintien côté alimentation (53, 54) doté du dispositif de découpe (60) peuvent être réglés de façon linéaire par rapport au moyen de maintien côté prélèvement (50, 51) et à la zone de prélèvement (56).

9. Dispositif selon au moins une des revendications précédentes, **caractérisé en ce que** le dispositif de définition de forme de boucle (23) présente un système de serrage (54), en particulier une encoche ou des roulettes, permettant de serrer une extrémité (64, 68) de la mèche sans fin (63).

10. Dispositif selon au moins une des revendications précédentes, **caractérisé en ce que** le dispositif de serrage des boucles (24) présente un anneau (36), qui est prévu de façon à pouvoir tourner autour du dispositif de définition de forme de boucle (23), la mèche sans fin (63) pouvant être amenée au dispositif de définition de forme de boucle (23) par une ouverture (37) dans la paroi de l'anneau (36).

11. Dispositif selon la revendication 10, **caractérisé en ce que** l'ouverture (37) est conçue sous la forme d'une fente s'étendant par endroits dans le sens circonférentiel de l'anneau (36).

12. Dispositif selon au moins une des revendications précédentes, **caractérisé en ce que** l'anneau (36) présente côté extérieur une rampe (46) qui, vue dans le sens longitudinal de l'anneau (36), commence en amont de l'ouverture (37) et se termine sur une face frontale (48) de l'anneau (36) en aval de l'ouverture (37).

13. Dispositif selon au moins une des revendications précédentes, **caractérisé en ce que** le dispositif de définition de forme de boucle (23) est bloqué en rotation et le dispositif de serrage des boucles (24) peut être entraîné en rotation.

14. Dispositif selon au moins une des revendications 10 à 13, **caractérisé en ce que** le dispositif (11) présente un arbre (25), à l'extrémité duquel est disposé le dispositif de définition de forme de boucle (23) et à l'autre extrémité duquel un moyen (26), en particulier une bride, est prévu pour fixer l'arbre (25) à une machine (10) affectée au dispositif (11), une section de palier (32) du dispositif de serrage des boucles (24), se raccordant à l'anneau (36) dans le sens longitudinal (35), étant prévue pour être logée sur l'arbre (25).

15. Procédé de préparation de mèches (69) découpées à une certaine longueur définie depuis une mèche sans fin (63), comprenant les étapes suivantes :
- définition d'une forme d'une boucle (67) à former à l'aide d'un dispositif de définition de forme de boucle (23) ;
- serrage de la mèche sans fin (63) sur le dispositif de définition de forme de boucle (23) à l'aide d'un dispositif de serrage des boucles (24) pouvant tourner autour du dispositif de définition de forme de boucle (23) ; et
- découpe de la boucle formée (67) de la mèche sans fin (63) pour générer la mèche découpée (69) à l'aide du dispositif de découpe (60).

16. Machine (10) de renforcement d'un produit semi-fini textile (13), comprenant :
- un dispositif (11) selon au moins une des revendications précédentes ;
- une aiguille (15), qui présente une pointe dotée d'un billet (16) permettant la prise de la mèche découpée (69) ; et
- une zone de prise (12), dans laquelle le produit semi-fini textile (13) peut être inséré à plat entre l'aiguille (15) et le dispositif (11) ;
l'aiguille (15) traversant le produit semi-fini textile (13) et formant un trou de passage (17) dans celui-ci lors d'une première étape de travail de la machine (10), l'oeillet (16) recevant centralement la mèche découpée (69) de la zone de prélèvement (56) du dispositif de définition de forme de boucle (23) lors d'une deuxième étape de travail de la machine (10), et insérant la mèche (63) doublée dans le trou de passage (17) lors d'une troisième étape de travail.
